# EUROPÄISCHE PATENTANMELDUNG

(11) **EP 3 623 752 A1**
(43) Veröffentlichungstag der Anmeldung: **18.03.2020**
(21) Anmeldenummer: 18194763.1
(22) Anmeldetag: 17.09.2018
(51) Int. Cl.: G01C 15/00, G06T 7/521, G06T 7/33

(54) **VERFAHREN ZUM GENERIEREN EINER ORTHOGONALANSICHT EINES OBJEKTS**

(71) Anmelder: Riegl Laser Measurement Systems GmbH, 3580 Horn (AT)
(72) Erfinder: Nikolaus, STUDNICKA, 1190 Wien (AT)
(74) Vertreter: Weiser & Voith Patentanwälte Partnerschaft

(57) **Zusammenfassung**

Die Erfindung betrifft ein Verfahren zum Generieren einer Orthogonalansicht (18) eines Objekts (2) in einer Umgebung (1) mit den Schritten:
Erzeugen (S₁) einer standortbezogenen ersten 3D-Punktewolke (7) über einen vorgegebenen Winkelbereich (Ω) um einen ersten Standort (8) mittels eines Laserscanners (5);
Darstellen (S₃) des Objekts (2) in einer computergenerierten Darstellung (13);
Auswählen (S₄) einer Ansichtsrichtung (14) und einer Ansichtsbegrenzung (15) in der computergenerierten Darstellung (13) ;
Projizieren (S₅) der ersten 3D-Punktewolke (7) oder einer davon abgeleiteten ersten 3D-Punktewolke (7') entgegen der Ansichtsrichtung (14) auf eine von der Ansichtsbegrenzung (15) gegebene Ebene (19); und
Ausgeben (S₆) der innerhalb der Ansichtsbegrenzung (15) auf die Ebene (19) projizierten ersten 3D-Punktewolke (7) oder abgeleiteten ersten 3D-Punktewolke (7') als Orthogonalansicht (18) .

## Beschreibung

Die vorliegende Erfindung betrifft ein Verfahren zum Generieren einer Orthogonalansicht eines Objekts in einer Umgebung.

Bei vielen professionellen Tätigkeiten, insbesondere solchen, die sich mit Architektur, Straßenbau oder Stadtplanung befassen, besteht ein großer Bedarf an Grund- und Aufrissen, sogenannten "Orthogonalansichten", von bereits bestehenden Gebäuden oder allgemein vom Straßen- bzw. Landschaftsbild. Solche Pläne bzw. Orthogonalansichten, die eine zweidimensionale Ansicht eines Gebäudes, Straßen- oder Landschaftsbilds sind, werden beispielsweise dazu eingesetzt, um bestehende Gebäude zu renovieren oder Neuplanungen von Bauten in der Stadt oder auf dem Land vorzunehmen.

Derzeit werden für derartige Orthogonalansichten Vermesser oder Photogrammeter engagiert, die zunächst entweder eine manuelle Vermessung mit Totalstationen, Nivelliergeräten, Goniometern, Laserentfernungsmessern usw. oder eine automatische Vermessung mit Kameras oder Laserscannern durchführen und anschließend manuell CAD-Pläne (Vektor-Grafiken) bzw. Orthogonalansichten erstellen. Werden sogenannte "Orthophotos" aus Fotos erstellt, müssen diese in der Regel zudem manuell nachbearbeitet werden.

Das manuelle Vermessen ("Abschreiten") ist zeitaufwändig und beschwerlich. Auch ein automatisches Vermessen mittels Kameras liefert noch keine Orthogonalansichten, denn Kameras befinden sich bei der Aufnahme eines Bilds an einem einzigen Standort, wodurch ihre Aufnahmen perspektivisch verzerrt sind. Dieselben Probleme treten bei Laserscannern auf, die von einem Standort aus eine Vielzahl von Lasermessstrahlen aussenden und beispielsweise aus Laufzeitmessungen der von der Umgebung reflektierten Lasermessstrahlen eine Vielzahl von Abtastpunkten (eine "Punktewolke") der Umgebung erstellen. Die so erzeugten Punktewolken geben die Umgebung jedoch wiederum nur ausgehend von dem Standort des Laserscanners wieder und sind deshalb wie Kamerabilder von ihrem Aufnahmeort aus perspektivisch verzerrt.

Es ist Ziel der Erfindung, ein Verfahren zum Erstellen von Orthogonalansichten zu schaffen, das flexibler und weniger aufwändig ist als bekannte Vermessungsverfahren.

Dieses Ziel wird gemäß der Erfindung durch ein Verfahren zum Generieren einer Orthogonalansicht eines Objekts in einer Umgebung erreicht, das folgende Schritte umfasst:
Erzeugen einer standortbezogenen ersten 3D-Punktewolke über einen vorgegebenen Winkelbereich um einen ersten Standort, wobei die erste 3D-Punktewolke mittels eines am ersten Standort befindlichen Laserscanners erzeugt wird, sodass die erste 3D-Punktewolke zumindest einen Teil des Objekts abbildet,
Darstellen des Objekts in einer computergenerierten Darstellung,
Auswählen einer Ansichtsrichtung und einer Ansichtsbegrenzung in der computergenerierten Darstellung,
Projizieren der ersten 3D-Punktewolke oder einer davon abgeleiteten Punktewolke entgegen der Ansichtsrichtung auf eine von der Ansichtsbegrenzung gegebene Ebene, und
Ausgeben der innerhalb der Ansichtsbegrenzung auf die Ebene projizierten ersten 3D-Punktewolke oder abgeleiteten Punktewolke als Orthogonalansicht.

Das erfindungsgemäße Verfahren schafft die Möglichkeit, Laserscan-Punktewolken derart zu verarbeiten, dass daraus Orthogonalansichten abgeleitet werden können. Die Erfindung ermöglicht es damit, aus einer einzigen Punktewolke mehrere verschiedene Orthogonalansichten von in der Punktewolke abgebildeten Objekten zu extrahieren. Dies ist besonders deshalb wertvoll, da beim Erstellen der Punktewolke in der Regel noch nicht feststeht, welche Orthogonalansicht ein Benutzer zu einem späteren Zeitpunkt tatsächlich benötigen wird. So können von einem einzigen in der Punktewolke abgebildeten Objekt mehrere Orthogonalansichten generiert werden, beispielsweise sowohl eine Vorderansicht als auch eine Seitenansicht eines Gebäudes.

Die Ansichtsbegrenzung kann zweierlei Aspekten dienen, nämlich einerseits der Bestimmung der Bildfläche (links, rechts, oben, unten) der Orthogonalansicht und andererseits der Bildtiefe, um Teile der Punktewolke auszublenden, die sich "vor" oder "hinter" der gewünschten Ansicht befinden, z.B. ein vor einem Gebäude befindlicher Baum. Die Ansichtsrichtung bestimmt wiederum, aus welcher Richtung das abzubildende Objekt betrachtet werden soll. Auch diese Schritte ermöglichen es, dass die Punktewolke vorab aufgenommen werden kann, und die Orthogonalansichten erst zu einem späteren Zeitpunkt individuell erstellt werden können.

Gemäß einer besonders bevorzugten Ausführungsform der Erfindung werden zumindest gleich zwei standortbezogene Punktewolken zur Erstellung der Orthogonalansicht herangezogen. Dazu kann das Verfahren folgende Schritte umfassen:
Erzeugen zumindest einer zweiten standortbezogenen 3D-Punktewolke, die um einem zweiten Standort erzeugt wurde, und
Ausrichten der ersten 3D-Punktewolke mit der zweiten 3D-Punktewolke anhand der unterschiedlichen Standorte,
wobei das Projizieren der ersten 3D-Punktewolke oder abgeleiteten ersten 3D-Punktewolke auch das Projizieren der zweiten 3D-Punktewolke oder einer davon abgeleiteten zweiten 3D-Punktewolke entgegen der Ansichtsrichtung auf die genannte Ebene umfasst, und das Ausgeben auch das Ausgeben der auf die Ebene projizierten zweiten 3D-Punktewolke oder abgeleiteten zweiten 3D-Punktewolke umfasst.

In dieser bevorzugten Ausführungsform werden somit zumindest zwei - an verschiedenen Standorten aufgezeichnete - Punktewolken eingesetzt und bei der Projektion in eine gemeinsame Orthogonalansicht zusammengeführt. Dies ist besonders vorteilhaft, weil durch die zweite Punktewolke Teile des Objekts in der Orthogonalansicht dargestellt werden können, die in der ersten Punktewolke nicht abgebildet waren, beispielsweise weil dort Teile einer Gebäudefassade durch einen Gebäudevorsprung, ein Auto oder einen Baum verdeckt waren.

Es versteht sich, dass diese Lösung nicht auf zwei Punktewolken beschränkt ist, sondern sich auf eine beliebige Anzahl von Punktewolken erweitern lässt. Dies eröffnet weitere Vorteile, sodass z.B. eine gesamte Straße, Stadt oder sogar ein gesamtes Land mit Punktewolken "kartographiert" und als Datenbank hinterlegt werden kann. Architekten, Ingenieure oder allgemein Benutzer, die an einer Orthogonalansicht eines beliebigen von der Gesamtheit der Punktewolken erfassten Gebäudes interessiert sind, können diese durch eine einfache Angabe der Ansichtsbegrenzung und Ansichtsrichtung selbst erstellen. Gegenüber der traditionellen Erstellung von Orthogonalansichten von allen möglichen Gebäuden aus allen möglichen Richtungen wird somit eine enorme Zeit- und Arbeitsersparnis erzielt.

Die gegenseitige Ausrichtung der Punktewolken kann auf verschiedene Arten verbessert werden. Erstens kann das Ausrichten anhand von beim Erzeugen der ersten und zweiten 3D-Punktewolken gemessenen Winkelausrichtungen erfolgen. Dies erlaubt ein schnelles und insbesondere ressourcenschonendes Ausrichten, da lediglich die Winkelausrichtungen der Laserscanner zum Zeitpunkt des Erstellens der Punktewolke bekannt sein müssen. Die Winkelausrichtungen können hierzu absolut gemessen werden, z.B. gegenüber dem Magnetfeld, oder relativ zueinander, beispielsweise mittels eines Gyroskops, das die Änderung der Bewegung vom ersten zum zweiten Standort misst.

Zweitens kann das Ausrichten durch ein computergestütztes Auffinden von gleichen Merkmalen in der ersten und zweiten 3D-Punktewolke erfolgen, beispielsweise durch Übereinstimmen von Gebäudewänden, Fahrzeugen oder dergleichen. Die Merkmale können dabei vorab identifiziert werden, insbesondere wenn Referenzziele zur Referenzierung eingesetzt werden, oder indem die Punktewolken solange gegeneinander verdreht werden, bis sie in Merkmalen übereinstimmen.

Das erfindungsgemäße Verfahren erlaubt eine Vielzahl von Anwendungs- bzw. Implementierungsmöglichkeiten, von denen drei Ausführungsformen besonders bevorzugt sind.

In einer ersten bevorzugten Ausführungsform wird jede 3D-Punktewolke nach dem Erzeugen direkt an ein Terminal gesandt und die Schritte Darstellen, Auswählen, Projizieren und Ausgeben werden auf dem Terminal durchgeführt. Dies ist besonders vorteilhaft, wenn die Erzeugung der Punktewolke und die Erzeugung der Orthogonalansichten in einer Hand liegen, z.B. wenn die mittels des Laserscanners erzeugten Punktewolken nur firmenintern verwendet werden. Die Punktewolken können in diesem Fall direkt an das Terminal, z.B. einen Standcomputer, Laptop, Mobiltelefon etc., gesandt werden, beispielsweise über das Internet, über eine WLAN-Verbindung zwischen Laserscanner und Terminal, über eine kabelgebundene LAN-Schnittstelle oder auch mittels eines Datenträgers, z.B. USB-Sticks.

In einer zweiten bevorzugten Ausführungsform wird jede 3D-Punktewolke nach dem Erzeugen an einen Server gesandt, das Darstellen des Objekts erfolgt auf einem mit dem Server über ein Netzwerk verbundenen Terminal, die Auswahl der Ansichtsrichtung und der Ansichtsbegrenzung wird vom Terminal an den Server gesandt, das Projizieren wird im Server durchgeführt und das Ausgeben der Orthogonalansicht erfolgt durch Senden der Orthogonalansicht vom Server an das Terminal. Diese Ausführungsform erlaubt ein serverbasiertes Generieren der Orthogonalansicht. Das Terminal, beispielsweise ein Laptop, Standcomputer oder Smartfon, dient lediglich der Auswahl der Ansichtsbegrenzung und Ansichtsrichtung, sodass alle rechenintensiven Verfahrensschritte - insbesondere das Projizieren - im Server stattfinden. Besonders vorteilhaft ist hier ferner, dass der Datentransfer über das Netzwerk äußerst gering ist, da die informationsreichen Punktewolken nicht zum Terminal transferiert werden müssen.

In einer dritten bevorzugten Ausführungsform wird jede 3D-Punktewolke an einen Server gesandt, eine Angabe über einen gewünschten geographischen Bereich wird von dem Terminal an den Server gesandt, und nur jene 3D-Punktewolke wird an das Terminal gesandt, die zumindest teilweise im genannten geographischen Bereich liegt, und die Schritte Darstellen, Auswählen, Projizieren und Ausgeben werden auf dem Terminal durchgeführt. Dies ist eine Mischvariante, die die Vorteile der beiden vorgenannten Ausführungsformen im Wesentlichen vereint. Es kann hierbei eine Vielzahl von Punktewolken im Server gespeichert werden, beispielsweise eines Bezirks, einer Stadt oder eines Lands. Der Benutzer kann für ihn relevante Punktewolken herunterladen und die rechenintensiven Schritte selbst ausführen, sodass der Server nur Speicherkapazitäten bereitstellen muss. Auch eine großräumige Ausrollung eines solchen Systems wird durch die technische Funktionalität der Individualisierung erleichtert, da hier Architekten oder Standplaner einzelne Punktewolken-Pakete von Straßen, Bezirken oder Städten vom Anbieter der Punktewolken individuell erwerben können, um daraufhin nach ihren eigenen Wünschen lokal Orthogonalansichten erstellen zu können.

Bei den serverbasierten Lösungen der zweiten und dritten Ausführungsform können die Punktewolken bereits vorab aufgenommen werden, beispielsweise mittels einer großflächigen Vermessung. Den Benutzern kann daraufhin Zugang zu den Punktewolken mittels einer browserbasierten Plattform geboten werden, um an frei wählbaren Orten in der Umgebung beliebige Orthogonalansichten zu erstellen. Die Punktewolken lassen sich individuell distribuieren, was auch die übertragene Datenmenge minimiert. Insbesondere können Punktewolken, Darstellungen oder abgeleitete Punktewolken entweder nach vordefinierten Gebieten oder gemäß der Auswahl der Ansichtsrichtung und der Ansichtsbegrenzung gebündelt werden, um die Verteilung zwischen Server und Terminal zu erleichtern.

Die genannte computergenerierte Darstellung, in welcher der Benutzer die Ansichtsrichtung und -begrenzung auswählt, kann beispielsweise als Karte von einem Drittanbieter bereitgestellt werden. Hierfür kann die Karte z.B. aus einem lokalen Speicher ausgelesen werden oder aus dem Internet heruntergeladen werden.

Bevorzugt wird jedoch die computergenerierte Darstellung des Objekts, in welcher die Ansichtsrichtung und -begrenzung ausgewählt werden, aus der bzw. den 3D-Punktwolke(n) selbst gewonnen, z.B. durch Datenreduzieren derselben. Die so erzeugte Darstellung kann beispielsweise ein vereinfachtes, auch kombiniertes, Entfernungs-, Farb- und/oder Intensitätsbild der Umgebung sein, das dem Benutzer mit geringem Bandbreitenbedarf über das Internet zur Auswahl der Ansichtsrichtung und -begrenzung zur Verfügung gestellt werden kann.

Solcherart z.B. über das Internet an den Benutzer distribuierte Darstellungen können überdies in besonders vorteilhafter Weise dann auch gleich als vereinfachte ("abgeleitete") 3D-Punktewolken der ursprünglichen 3D-Punktewolke verwendet werden, wenn sie Entfernungsinformation ("Tiefeninformation") mitenthalten, was auch als "2.5D" bezeichnet wird. Aus solchen 2.5D-Darstellungen kann eine abgeleitete, vereinfachte bzw. benutzerangepasste 3D-Punktewolke "rekonstruiert" werden, aus welcher dann die gewünschte Orthogonalansicht durch Projizieren in der ausgewählten Ansichtsrichtung und -begrenzung erzeugt wird. Mit anderen Worten wird also bevorzugt die abgeleitete erste 3D-Punktewolke aus der computergenerierten Darstellung selbst erzeugt, und das Projizieren wird anhand der abgeleiteten ersten 3D-Punktewolke durchgeführt. Damit können insbesondere bei serverbasierten Lösungen die zu übertragenden Daten weiter reduziert werden, da die (in der Regel datenreduzierten) 2.5D- bzw. 3D-Objektdarstellungen gleichzeitig die an den Benutzer zu distribuierenden abgeleiteten Punktewolken repräsentieren.

Alternativ kann die abgeleitete Punktewolke durch eine Datenreduktion der ersten Punktewolke erzeugt werden, beispielsweise unmittelbar im Laserscanner oder durch Datenverarbeitung im Server. Zu diesem Zweck können beispielsweise Punkte der Punktewolke gelöscht werden, die zu nahe an anderen Punkten liegen, wodurch effektiv die Punktedichte reduziert wird.

Bevorzugt wird beim Erzeugen jeder 3D-Punktewolke über den vorgegebenen Winkelbereich auch ein Farbbild aufgenommen und die Punktewolke mit dem Farbbild vereint, sodass die Orthogonalansicht mit entsprechenden Farbwerten ausgegeben wird. Dies ermöglicht farbige Orthogonalansichten, die mit herkömmlichen Abbildungsmethoden nicht erreichbar sind, da Panorama-Farbbilder naturgemäß keine echte Orthogonalansicht bieten können.

Die Erfindung wird nachfolgend anhand von in den beigeschlossenen Zeichnungen dargestellten Ausführungsbeispielen näher erläutert. In den Zeichnungen zeigen:
Fig. 1 ein Objekt in einer Umgebung mit mehreren bei dem Verfahren der Erfindung zum Einsatz kommenden Komponenten in einer schematischen Perspektivansicht;
Fig. 2 ein beispielhaftes standortbezogenes Panoramabild des Objekts von Fig. 1;
Fig. 3 eine Darstellung des Objekts von Fig. 1 in einer computergenerierten Darstellung während der Durchführung des Verfahrens der Erfindung;
Fig. 4 eine mit dem Verfahren der Erfindung generierte Orthogonalansicht des Objekts von Fig. 1;
Fig. 5 einen Laserscanner, einen Server und drei Terminals zur Durchführung einer weiteren Ausführungsform des Verfahrens der Erfindung in einer schematischen Ansicht;
Fig. 6 ein Flussdiagramm einer ersten Ausführungsform des erfindungsgemäßen Verfahrens;
Fig. 7 ein Flussdiagramm einer zweiten Ausführungsform des erfindungsgemäßen Verfahrens; und
Fig. 8 ein Flussdiagramm einer dritten Ausführungsform des erfindungsgemäßen Verfahrens.

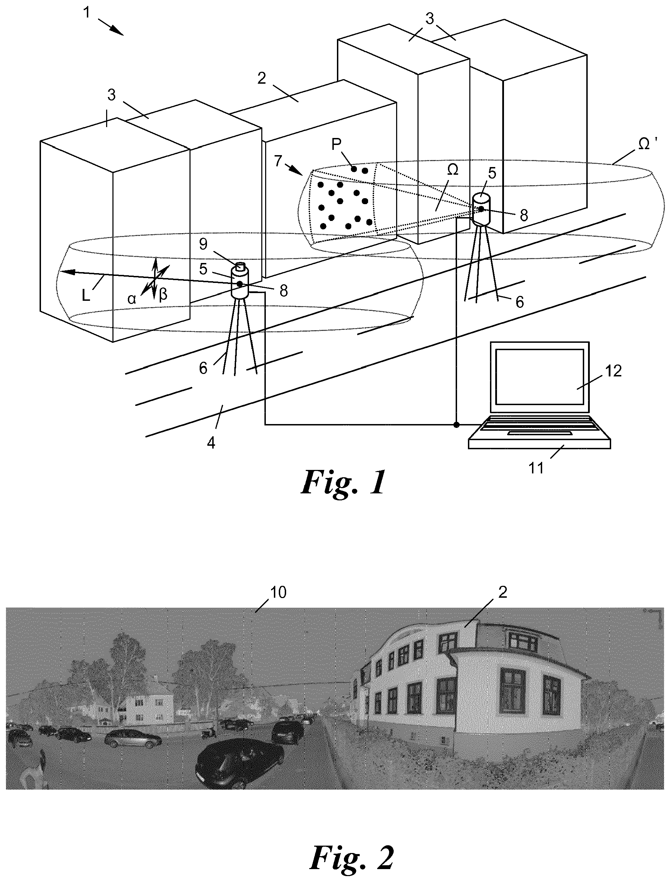

Fig. 1 zeigt eine Umgebung 1, in der sich ein Objekt 2 befindet. Das Objekt 2 ist beispielsweise ein Haus, das sich in der Umgebung 1 neben anderen Häusern 3 entlang einer Straße 4, im Allgemeinen in einer Straßenlandschaft, befindet. Andere Beispiele von Objekten 2 sind Schlösser, Brücken, Industriegebäude, Landschaften, Tag- oder Untertagbergwerke etc.

Ziel des im Folgenden dargelegten Verfahren ist es, das Objekt 2 zu vermessen und einen Plan, d.h. eine Orthogonalansicht, dessen zu generieren. Dazu werden ein oder mehrere Laserscanner 5 eingesetzt, die beispielsweise von einem Dreibein 6 in einer Arbeitshöhe getragen werden.

Zum Erzeugen einer 3D-Punktewolke 7 der Umgebung 1 sendet jeder Laserscanner 5 über einen vorbestimmten Winkelbereich Ω (Raumwinkel) beispielsweise eine Vielzahl von Laserstrahlen L aus, wobei anhand der im Laserscanner 5 registrierten Reflexionen der Laserstrahlen L die Umgebung 2 in Form von Entfernungsmesspunkten P vermessen wird, beispielsweise mittels Laufzeit- oder Interferenzmessung. Die Gesamtheit der Entfernungsmesspunkte P bildet die 3D-Punktewolke 7. Zur Referenz wird die jeweilige Aussenderichtung der Laserstrahlen L z.B. in der Horizontalebene als Azimut α und in einer zum Azimut α parallelen Senkrechtebene als Elevation β angegeben. Die der über die jeweiligen Aussenderichtungen {α, β} ausgesandten Laserstrahlen L sind dabei bevorzugt gleichmäßig über den vorbestimmten Winkelbereich Ω verteilt.

Im Beispiel von Fig. 1 ist beim rechten Laserscanner 5 ein Winkelbereich Ω dargestellt, der im Azimut α einen Winkelbereich von 0° bis 30° (ausgehend von einem willkürlich gewähltem Ursprung) und in der Elevation β einen Winkelbereich von -15° bis +15° (ausgehend von der Horizontalebene) überspannt. Als Alternative ist ferner ein Winkelbereich Ω' dargestellt, der im Azimut α einen Winkelbereich von 0° bis 360° überspannt. Der dargestellte Winkelbereich Ω' überspannt in der Elevation β im gezeigten Beispiel zwar einen begrenzten Winkelbereich von -15° bis +15°, könnte jedoch auch einen Winkelbereich von bis zu -90° bis +90° überspannen, sodass der Winkelbereich Ω' auch als Kugel geformt sein könnte.

Die Punktewolke 7 kann als Punkte P entweder die Entfernungsmesswerte der Lasermessstrahlen L mit der jeweiligen Aussenderichtung {α, β} verknüpfen oder die Entfernungsmesswerte bereits in ein beispielsweise kartesisches Koordinatensystem umrechnen, z.B. in ein globales Koordinatensystem, wenn der Standort 8 des Laserscanners zum Zeitpunkt der Erzeugung der Punktewolke 7 georeferenziert ist, z.B. mittels GPS-Positionen.

Zusätzlich zum Erzeugen der 3D-Punktewolke 7 können über den vorgegebenen Winkelbereich Ω mittels einer Kamera 9 auch ein oder mehrere Farbbilder 10 aufgenommen werden, von denen eines in Fig. 2 beispielhaft dargestellt ist. Danach kann die Punktewolke 7 mit dem bzw. den Farbbild(ern) 10 vereint werden, d.h. jedem Punkt P der Punktewolke 7 kann ein Farbwert zugeordnet werden. Dadurch können die in der Folge erzeugten Orthogonalansichten auch farblich ausgegeben werden.

Um die Farbwerte gemeinsam mit den Punkten P zu speichern, könnte z.B. der Farbwert in einen Schwarzweißwert umgerechnet werden (sofern er nicht bereits derart aufgenommen wurde) und in einem Farbkanal eines RGB-Bildes gespeichert werden, während der zugehörige Entfernungsmesswert des Punktes P in den anderen beiden Farbkanälen (oder nur in einem der Farbkanäle) gespeichert werden könnte.

Wie aus Fig. 2 ersichtlich ist, bilden standortbezogen erzeugte Punktewolken 7 bzw. Farbbilder 10 die aufgenommene Umgebung 1 samt Objekt 2 immer gekrümmt ab, wodurch aufgezeichnete Ebenen verzerrt dargestellt werden, wie bei dem Haus 2 in Fig. 2 deutlich ersichtlich ist. Deshalb sind Pläne bzw. Orthogonalansichten aus derartigen standortbezogenen Ansichten nicht entnehmbar.

Zur weiteren Verarbeitung wird jede Punktewolke 7 daher nach dem Erzeugen vom jeweiligen Laserscanner 5 an ein Terminal 11 gesandt, beispielsweise einen Laptop, Standcomputer, Mobiltelefon oder dergleichen. Die Übertragung kann beliebig erfolgen, beispielsweise "online" direkt nach dem bzw. während des Erzeugens der Punktewolke(n) 7 über eine kabellose oder kabelgebundene Schnittstelle, oder auch erst nach dem Erzeugen einer oder mehrerer Punktewolke(n) 7 "offline", z.B. mit Hilfe eines Datenträgers wie eines USB-Sticks.

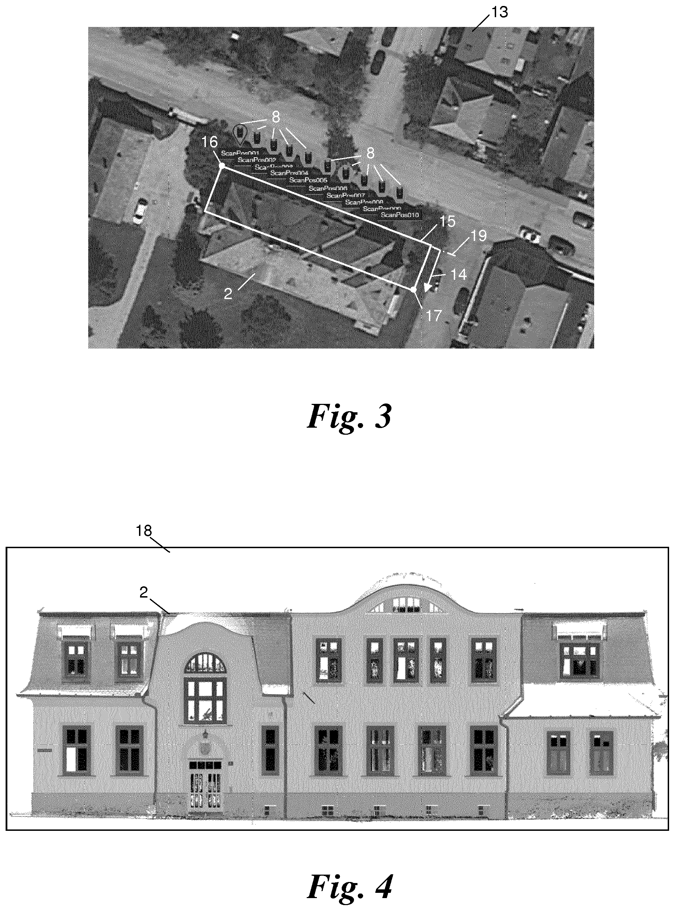

Wie in Fig. 3 gezeigt, stellt das Terminal 11 dem Benutzer das Objekt 2 auf einem Bildschirm 12 in einer computergenerierten Darstellung 13 dar. Diese Darstellung 13 ist im einfachsten Fall eine das Objekt 2 abbildende geographische Karte, wie im Beispiel von Fig. 3 dargestellt. Die Darstellung 13 muss nicht einmal Informationen über die aufgezeichnete Punktewolke 7 selbst enthalten, d.h. kann von dieser entkoppelt sein. Die Darstellung 13 kann von einem Drittanbieter erworben werden, beispielsweise von Google Maps. Im dargestellten Beispiel werden jedoch zumindest die Standorte 8 der Punktewolken 7 in der Darstellung 13 eingezeichnet, um dem Benutzer Informationen über die Verfügbarkeit von Punktewolken 7 zu geben.

In einer anderen Ausführungsform wird anstelle einer von der Punktewolke 7 unabhängigen Karte eine Darstellung 13 gewählt, die die Punktewolke 7 (oder mehrere Punktewolken 7, wie im Anschluss erläutert) unmittelbar darstellt, beispielsweise in einer Draufsicht. Dies ermöglicht dem Benutzer, bereits vor Erstellung der Orthogonalansicht zu wissen, welche Daten die Punktewolke(n) 7 bietet bzw. bieten. Derartige Darstellungen 13 können je nach Ausgestaltung Entfernungs-, Farb- und/oder Intensitätsbilder sein. Die Darstellungen 13 sind je nach Ausführungsform 2D-, 2.5D- oder 3D-Darstellungen. Unter 2.5D-Darstellungen werden 2D-Bilder verstanden, die zusätzlich eine Entfernungs- bzw. Tiefeninformation kodieren, beispielsweise als Tiefeninformation "versteckt" in einem nicht verwendeten Farbkanal des Bildes.

Wenn die Darstellung 13 als 2.5D- oder 3D-Darstellung 13 direkt aus der bzw. den Punktewolke(n) 7 gewonnen worden ist, kann aus einer solchen 2.5D- bzw. 3D-Darstellung 13 wieder eine Punktewolke 7' rekonstruiert werden, hier als "abgeleitete" Punktewolke 7' der Punktewolke 7 bezeichnet. Beispielsweise waren in der Darstellung 13 jene Entfernungsmesspunkte P der Punktewolke 7 unberücksichtigt geblieben, die für die computergenerierte Darstellung 13 nicht relevant waren. In diesem Fall ist die Größe einer von der Darstellung 13 rekonstruierten abgeleiteten Punktewolke 7' geringer als jene der ursprünglichen Punktewolke 7.

Um nun eine Orthogonalansicht des Objekts 2 zu generieren, wählt der Benutzer in der computergenerierten Darstellung 13 eine Ansichtsrichtung 14 und eine Ansichtsbegrenzung 15 aus. Wenn die Darstellung 13 eine Draufsicht ist, sei es als Karte mit dem eingezeichneten Objekt 2 oder auch direkt von der/den Punktewolke(n) 7 abgeleitet, kann die Ansichtsbegrenzung 15 besonders einfach als Rechteck in die Karte eingetragen werden, beispielsweise durch ein erstes Klicken auf einen Startpunkt 16 und ein zweites Klicken auf einen diagonalen Endpunkt 17. Alternativ kann das erste Klicken durch das Niederdrücken einer Maus- oder Eingabetaste und das zweite Klicken durch das Loslassen derselben Taste erfolgen ("Aufziehen eines Rahmens mit der Maus"). Dabei kann gleichzeitig eine der kürzeren Seiten des Rechtecks als Ansichtsrichtung gewählt werden, wenn die Richtung von Start- zu Endpunkt 16, 17 mitberücksichtigt wird.

Wenn die computergenerierte Darstellung 13 keine 2D- sondern eine perspektivische 3D-Ansicht ist, kann die Ansichtsbegrenzung 15 beispielsweise als Quader in der 3D-Ansicht angegeben werden. Die Ansichtsrichtung 14 kann in Richtung der dem Quader nächstliegenden in der Punktewolke vorhandenen Ebene (z.B. Wand) automatisch ermittelt werden.

Die in Fig. 3 dargestellte Ansichtsbegrenzung 15 begrenzt in zwei Dimensionen, die durch das dargestellte Rechteck gegeben sind. Zusätzlich kann noch eine Höhen- bzw. Tiefenbegrenzung ausgewählt werden, beispielsweise durch einen voreingestellten oder einstellbaren numerischen Wert. Bevorzugt ist die Ansichtsbegrenzung 15 deshalb ein Quader, auch wenn die Darstellung 13 zweidimensional ist.

Zum Generieren der Orthogonalansicht 18, die in Fig. 4 als Ergebnis dargestellt ist, projiziert das Terminal 11 die 3D-Punktewolke 7 oder die abgeleitete Punktewolke 7' - sei letztere direkt von der Punktewolke 7 durch Datenreduktion erzeugt worden oder aus einer von der Punktewolke 7 erzeugten 2.5D- oder 3D-Darstellung 13 rekonstruiert worden - nun entgegen der Ansichtsrichtung 14 auf eine von der Ansichtsbegrenzung 15 gegebene Ebene. Bevorzugt liegt eine Seite der Ansichtsbegrenzung 15 in der Ebene (z.B. liegt eine Seite der Quader-Ansichtsbegrenzung in der Ebene). Diese Ebene ist zudem bevorzugt normal zur Ansichtsrichtung 14. Insgesamt liegt deshalb jene Seite der Quader-Ansichtsbegrenzung in der Ebene, die in Ansichtsrichtung 14 gesehen vorne liegt. Im Beispiel von Fig. 3 erstreckt sich die Ebene vertikal und ist parallel zur in Ansichtsrichtung gesehen vorderen Seite 19 des als Ansichtsbegrenzung dienenden Rechtecks. Zur Erstellung eines Grundrisses würde sich die Ebene entsprechend horizontal erstrecken.

In einem letzten Verfahrensschritt wird die derart generierte Orthogonalansicht 18 ausgegeben, beispielsweise durch eine Anzeige auf dem Bildschirm 12 des Terminals 11 oder durch Drucken auf einem an das Terminal 11 angeschlossenem Drucker.

Anstelle des Erzeugens einer einzigen Punktewolke 7 oder abgeleiteten Punktewolke 7' und anschließenden Generierens der Orthogonalansicht 18 mittels dieser einzigen Punktewolke 7 bzw. 7' können auch mehrere Punktewolken 7 bzw. 7' vorab erzeugt werden. Dazu wird der Laserscanner 5 - oder ein anderer Laserscanner 5 - an einem zweiten Standort 8 aufgestellt und von diesem aus zumindest eine zweite standortbezogene Punktewolke 7 (bzw. abgeleitete Punktewolke 7') erzeugt, wie in Fig. 1 schematisch dargestellt.

Um die erste und die (zumindest eine) zweite Punktewolke 7 zusammenzuführen, werden diese zueinander ausgerichtet. Dies erfolgt zunächst anhand der unterschiedlichen Standorte 8, d.h. die Punktewolken 7 werden in einem Abstand, der einer Differenz der beiden Standorte 8 entspricht, voneinander positioniert. In bestimmten Fällen ist dabei keine Winkelausrichtung der beiden Punktewolken 7 erforderlich, beispielsweise wenn die Punktewolken 7 eine gleiche Aufnahmerichtung hatten. Alternativ können auch die abgeleiteten Punktewolken 7' zusammengeführt werden, wenn die Projektion anhand der abgeleiteten Punktewolken 7' durchgeführt wird.

Zusätzlich kann das Ausrichten ferner anhand von beim Erzeugen der ersten und zweiten 3D-Punktewolke 7 gemessenen Winkelausrichtungen der Laserscanner 5 erfolgen. Die Winkelausrichtungen der Laserscanner 5 können beispielsweise absolut gemessen werden (z.B. am Magnetfeld der Erde orientiert) oder einen relativen Bezug aufweisen, beispielsweise durch eine Messung mittels eines Gyroskops, wenn derselbe Laserscanner 5 vom ersten Standort 8 zum zweiten Standort 8 überführt worden ist.

Alternativ oder zusätzlich kann das Ausrichten ferner durch ein computergestütztes Auffinden von gleichen Merkmalen in den ersten und zweiten 3D-Punktewolken 7 bzw. 7' erfolgen. Die Merkmale können dabei vorab identifiziert werden, insbesondere wenn leicht identifizierbare, bekannte "Targets", z.B. hochreflektierende oder in der Form bekannte Markierungsobjekte, zur Referenzierung eingesetzt werden, oder durch Trial-and-Error, indem die Punktewolken solange gegeneinander verdreht werden, bis sie in aufgefundenen Merkmalen übereinstimmen.

Nachdem die (zumindest zwei) Punktewolken 7 oder abgeleiteten Punktewolken 7' ausgerichtet wurden, können diese wie eine einzige Punktewolke 7 bzw. eine einzige abgeleitete Punktewolke 7' behandelt werden. Insbesondere können die Punkte P der einzelnen Punktewolken 7, 7' auch als eine kombinierte Punktewolke 7, 7' gespeichert werden.

Um die Orthogonalansicht 18 anhand zwei oder mehr Punktewolken 7 bzw. 7' zu generieren, umfasst das Projizieren der ersten 3D-Punktewolke 7 bzw. 7' auch das Projizieren der zweiten 3D-Punktewolke 7 bzw. 7' entgegen der Ansichtsrichtung 14 auf die genannte Ebene 19. Wenn die mehreren Punktewolken 7 bzw. 7' in eine einzige zusammengeführt wurden, erfolgt dementsprechend nur eine Projektion, ansonsten mehr als eine.

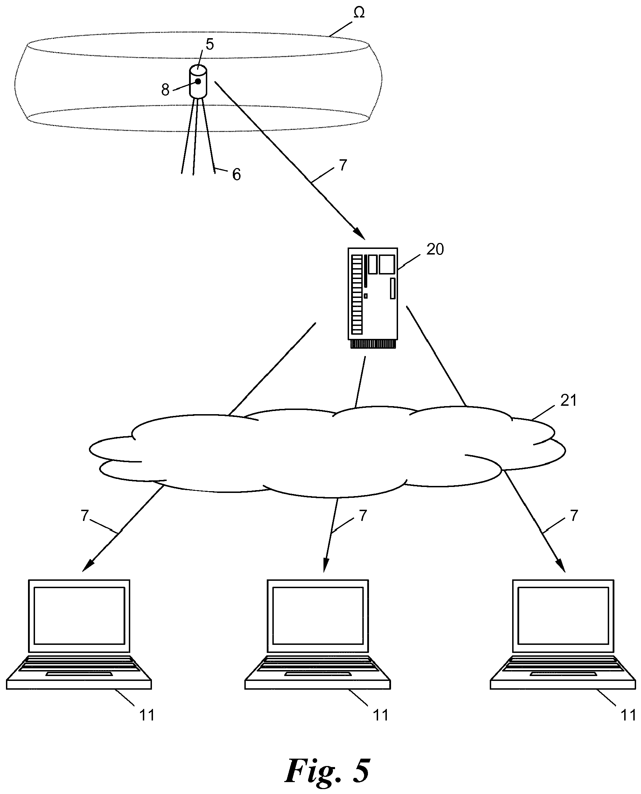

Fig. 5 zeigt, dass die Punktewolken 7 bzw. abgeleiteten Punktewolken 7' nicht unmittelbar an ein Terminal 11 gesandt werden müssen, sondern auch an einen Server 20 gesandt werden können, der einen entsprechend großen Speicher aufweist, um eine Vielzahl von Punktewolken 7, 7' zu speichern. Beispielsweise sind im Server 20 die Punktewolken 7, 7' ganzer Städte oder Länder gespeichert. Die Terminals 11, die nicht selbst über die Punktewolken 7, 7' verfügen, dienen als Schnittstelle zu den Benutzern, die die Orthogonalansicht 18 generieren wollen. Die Terminals 11 sind mit dem Server 20 beispielsweise über ein Netzwerk 21 wie das Internet verbunden.

In einer ersten serverbasierten Ausführungsform führt der Server 20 alle rechenintensiven Schritte selbst durch. Dabei erfolgt - nachdem jede 3D-Punktewolke 7 nach dem Erzeugen an den Server 20 gesandt wurde - das Darstellen des Objekts 2 in der Darstellung 13 auf dem Terminal 11. Danach wählt der Benutzer in der Darstellung 13 die Ansichtsrichtung 14 und die Ansichtsbegrenzung 15 aus, und die Auswahl der Ansichtsrichtung 14 und der Ansichtsbegrenzung 15 wird vom Terminal 11 an den Server 20 gesandt. Der Server 20 führt danach das Projizieren durch und gibt die Orthogonalansicht 18 durch Senden der Orthogonalansicht 18 vom Server 20 an das Terminal 11 aus.

In einer zweiten serverbasierten Ausführungsform dient der Server 20 lediglich als Speichereinheit für eine Vielzahl von Punktewolken 7, die selektiv an die Benutzer gesandt werden können. Dazu wird - nachdem jede 3D-Punktewolke 7 nach dem Erzeugen an den Server 20 gesandt wurde - eine Angabe über einen gewünschten geographischen Bereich von dem Terminal 11 an den Server 20 gesandt. Die Angabe kann entweder eine allgemeine Angabe wie die gewünschte Straße oder Stadt sein oder direkt die Ansichtsrichtung 14 und Ansichtsbegrenzung 15. Folglich wird/werden nur jene 3D-Punktewolke(n) 7, 2.5D bzw. 3D-Darstellungen 13 oder abgeleitete Punktewolken 7' an das Terminal 11 gesandt, die zumindest teilweise im genannten geographischen Bereich liegt bzw. liegen, und die Schritte Darstellen, Auswählen, Projizieren und Ausgeben werden auf dem Terminal 11 durchgeführt. Da die genannte Angabe auch direkt die Ansichtsrichtung 14 und Ansichtsbegrenzung 15 sein kann (in diesem Fall erfolgt die Darstellung des Objekts 2 anhand einer von den Punktewolken 7 unabhängigen Darstellung 13), können die Schritte des Darstellens und des Auswählens entweder vor oder nach dem Senden der Punktewolke (n) 7 vom Server 20 an das Terminal 11 erfolgen.

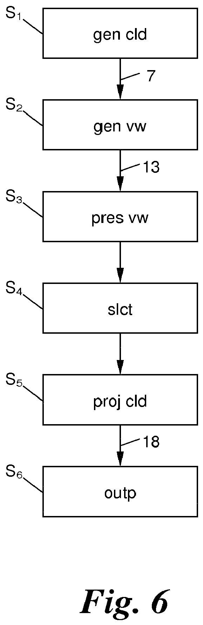

Fig. 6 zeigt das oben beschriebene Verfahren in einer ersten Ausführungsform, die beispielsweise serverlos durchgeführt werden kann. Dabei wird in einem ersten Schritt S₁ die Punktewolke 7 erzeugt, in einem zweiten Schritt S₂ aus der Punktewolke 7 die Darstellung 13 gewonnen, beispielsweise als 2D-, 2.5D- oder 3D-Darstellung der Punktewolke 7. In einem dritten Schritt S₃ wird die Darstellung 13 dargestellt, beispielsweise am Bildschirm 12 des Terminals 11, wonach die Ansichtsrichtung 14 und die Ansichtsbegrenzung 15 in der Darstellung 13 in einem Schritt S₄ ausgewählt werden. Nach dem Projizieren in einem Schritt S₅ wird die Orthogonalansicht in einem Schritt S₆ ausgegeben.

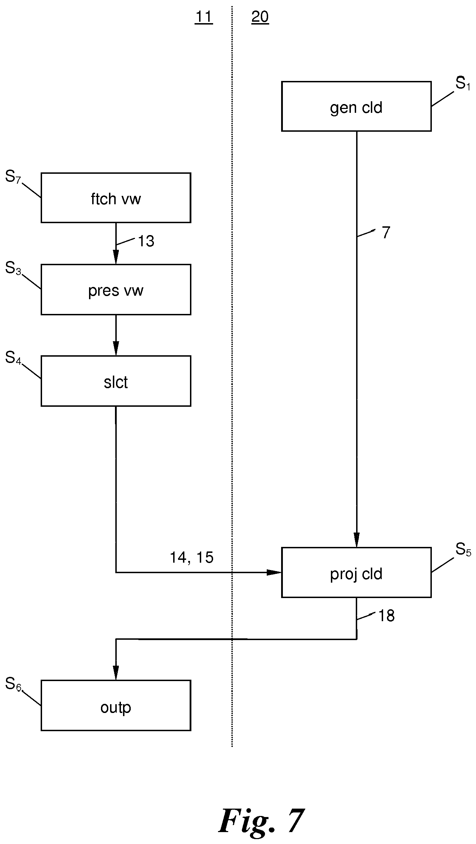

Fig. 7 zeigte eine weitere Ausführungsform, bei der die links dargestellten Schritte im Terminal 11 stattfinden und die rechts dargestellten Schritte im Server 20 durchgeführt werden (mit Ausnahme des Schritts S₁, der im Laserscanner 5 durchgeführt wird). Insbesondere wird in dieser Ausführungsform die Darstellung 13 nicht aus der Punktewolke 7 selbst generiert, sondern in einem Schritt S₇ empfangen oder geladen, beispielsweise von einem Drittanbieter über das Internet.

Somit ist der Schritt S₁ des Erzeugens der Punktewolke 7 vom Schritt S₃ des Darstellens der Darstellung 13 unabhängig, denn die Darstellung 13 wird nicht unmittelbar aus der Punktewolke 7 gewonnen. Nach dem Auswählen der Ansichtsrichtung 14 und der Ansichtsbegrenzung 15 im Terminal 11 in Schritt S₄ werden diese an den Server 20 gesandt, der das Projizieren in Schritt S₅ durchführt. Die derart erzeugte Orthogonalansicht 18 wird daraufhin an das Terminal 11 übersandt, wo diese in Schritt S₆ ausgegeben wird.

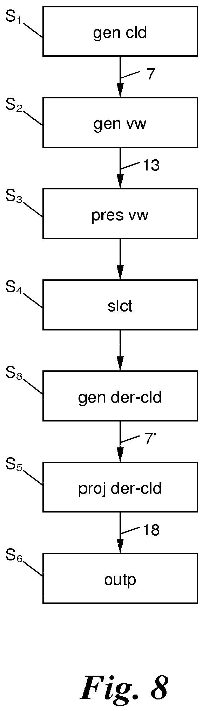

Fig. 8 zeigt eine Ausführungsform, bei der die Schritte S₅ des Projizierens und S₆ des Ausgebens auf Basis einer abgeleiteten Punktewolke 7' erfolgen. Hierbei erfolgt der Schritt S₂ des Gewinnens der Darstellung 13 durch Datenreduzieren der Punktewolke(n) 7, wobei die Darstellung 13 als 2.5D- oder 3D-Darstellung 13 vorliegt und in Schritt S₃ z.B. als 2D-Ansicht ausgegeben wird. Nach (oder alternativ vor) dem Schritt S₄ des Auswählens wird in einem Schritt S₈ die abgeleitete Punktewolke 7' aus der 2.5D- oder 3D-Darstellung 13 erzeugt, d.h. die (abgeleitete) Punktewolke 7' wird aus der Darstellung 13 "rekonstruiert", um den Projektionsschritt S₅ anschließend auf die abgeleitete Punktewolke 7' anwenden zu können.

Je nach Ausgestaltung des Datenreduzierens in den Schritten S₂ und/oder S₈ kann somit eine größere oder geringere Datenreduktion für die abgeleitete Punktewolke 7' erzielt werden. Datenreduzierte 2.5D- bzw. 3D-Darstellungen 13 können bandbreitenschonend auch an Terminals 11 mit Internetanbindung geringer Bandbreite, z.B. über Mobilfunk, distribuiert werden, welche daraus abgeleitete Punktewolken 7' für die Projektion rekonstruieren können.

In der Ausführungsform von Fig. 8 werden der Schritt S₁ im Laserscanner 5 durchgeführt und die Schritte S₂ - S₆, S₈ im Terminal 11. Alternativ werden der Schritt S₂ im Server 20 und die Schritte S₃ - S₆, S₈ im Terminal 11 durchgeführt, nachdem die Darstellung 13 vom Server 20 an das Terminal 11 übertragen wurde. Weiters alternativ wäre eine Mischform wie in der Ausführungsform von Fig. 7 möglich, wobei die Schritte S₂ und S₈ im Server 20 stattfinden und die Schritte S₃, S₄, S₅ und S₆ im Terminal 11.

Die Erfindung ist demgemäß nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Verfahren zum Generieren einer Orthogonalansicht (18) eines Objekts (2) in einer Umgebung (1), **gekennzeichnet durch**
Erzeugen (S₁) einer standortbezogenen ersten 3D-Punktewolke (7) über einen vorgegebenen Winkelbereich (Ω) um einen ersten Standort (8), wobei die erste 3D-Punktewolke (7) mittels eines am ersten Standort (8) befindlichen Laserscanners (5) erzeugt wird, sodass die erste 3D-Punktewolke (7) zumindest einen Teil des Objekts (2) abbildet;
Darstellen (S₃) des Objekts (2) in einer computergenerierten Darstellung (13);
Auswählen (S₄) einer Ansichtsrichtung (14) und einer Ansichtsbegrenzung (15) in der computergenerierten Darstellung (13) ;
Projizieren (S₅) der ersten 3D-Punktewolke (7) oder einer davon abgeleiteten ersten 3D-Punktewolke (7') entgegen der Ansichtsrichtung (14) auf eine von der Ansichtsbegrenzung (15) gegebene Ebene (19); und
Ausgeben (S₆) der innerhalb der Ansichtsbegrenzung (15) auf die Ebene (19) projizierten ersten 3D-Punktewolke (7) oder abgeleiteten ersten 3D-Punktewolke (7') als Orthogonalansicht (18) .

2. Verfahren nach Anspruch 1, **gekennzeichnet durch** Erzeugen (S₁) zumindest einer zweiten standortbezogenen 3D-Punktewolke (7), die um einem zweiten Standort (8) erzeugt wurde; und
Ausrichten der ersten 3D-Punktewolke (7) mit der zweiten 3D-Punktewolke (7) anhand der unterschiedlichen Standorte (8);
wobei das Projizieren (S₅) der ersten 3D-Punktewolke (7) oder abgeleiteten ersten 3D-Punktewolke (7') auch das Projizieren der zweiten 3D-Punktewolke (7) oder einer davon abgeleiteten zweiten 3D-Punktewolke (7') entgegen der Ansichtsrichtung (14) auf die genannte Ebene (19) umfasst, und das Ausgeben (S₆) auch das Ausgeben der auf die Ebene (19) projizierten zweiten 3D-Punktewolke (7) oder abgeleiteten zweiten 3D-Punktewolke (7') umfasst.

3. Verfahren nach Anspruch 2, wobei das Ausrichten ferner anhand von beim Erzeugen (S₁) der ersten und zweiten 3D-Punktewolke (7) gemessenen Winkelausrichtungen erfolgt.

4. Verfahren nach Anspruch 2 oder 3, wobei das Ausrichten ferner durch ein computergestütztes Auffinden von gleichen Merkmalen in der ersten und zweiten 3D-Punktewolke (7) erfolgt.

5. Verfahren nach einem der Ansprüche 1 bis 4, wobei jede 3D-Punktewolke (7) nach dem Erzeugen (S₁) direkt an ein Terminal (11) gesandt wird und die Schritte Darstellen (S₃), Auswählen (S₄), Projizieren (S₅) und Ausgeben (S₆) auf dem Terminal (11) durchgeführt werden.

6. Verfahren nach einem der Ansprüche 1 bis 4, wobei jede 3D-Punktewolke (7) nach dem Erzeugen (S₁) an einen Server (20) gesandt wird, das Darstellen (S₃) des Objekts (2) auf einem mit dem Server (20) verbundenen Terminal (11) erfolgt, die Auswahl der Ansichtsrichtung (14) und der Ansichtsbegrenzung (15) vom Terminal (11) an den Server (20) gesandt wird, das Projizieren (S₅) im Server (20) durchgeführt wird und das Ausgeben (S₆) der Orthogonalansicht (18) durch Senden der Orthogonalansicht (18) vom Server (20) an das Terminal (11) erfolgt.

7. Verfahren nach einem der Ansprüche 1 bis 4, wobei jede 3D-Punktewolke (7) an einen Server (20) gesandt wird, eine Angabe über einen gewünschten geographischen Bereich von dem Terminal (11) an den Server (20) gesandt wird, und nur jene 3D-Punktewolke (7) an das Terminal (11) gesandt wird, die zumindest teilweise im genannten geographischen Bereich liegt, und die Schritte Darstellen (S₃), Auswählen (S₄), Projizieren (S₅) und Ausgeben (S₆) auf dem Terminal (11) durchgeführt werden.

8. Verfahren nach einem der Ansprüche 1 bis 7, wobei die computergenerierte Darstellung (13) aus der ersten 3D-Punktwolke (7) durch Datenreduzieren gewonnen wird.

9. Verfahren nach Anspruch 8, wobei die abgeleitete erste 3D-Punktewolke (7') aus der computergenerierten Darstellung (13) erzeugt wird, und
das Projizieren (S₅) anhand der abgeleiteten ersten 3D-Punktewolke (7') durchgeführt wird.

10. Verfahren nach einem der Ansprüche 1 bis 7, wobei beim Erzeugen (S₁) jeder 3D-Punktewolke (7) über den vorgegebenen Winkelbereich (Ω) auch ein Farbbild (10) aufgenommen wird und die Punktewolke (7) mit dem Farbbild (10) vereint wird, sodass die Orthogonalansicht (18) mit entsprechenden Farbwerten ausgegeben wird.
